# EUROPÄISCHE PATENTSCHRIFT

(11) **EP 3 756 797 B1**
(45) Veröffentlichungstag und Bekanntmachung des Hinweises auf die Patenterteilung: **21.09.2022**
(21) Anmeldenummer: 20178701.7
(22) Anmeldetag: 08.06.2020
(51) Int. Cl.: B22F 3/105, B29C 64/153, B29C 64/25, B29C 64/268, B29C 64/364, B29C 64/371, B33Y 10/00, B33Y 30/00, B29C 64/255, B22F 10/28, B22F 12/30, B22F 12/00, B22F 12/70, B22F 10/20

(54) **VERFAHREN ZUM TESTEN NEUER WERKSTOFFZUSAMMENSETZUNGEN FÜR DAS PULVERBETTBASIERTE LASERSCHMELZEN SOWIE DAFÜR AUSGEBILDETE VORRICHTUNG**
METHOD FOR TESTING NEW MATERIAL COMPOSITIONS FOR POWDER BED-BASED LASER MELTING, AND DEVICE THEREFOR
PROCÉDÉ D'ESSAI DE NOUVELLES COMPOSITIONS DE MATERIAUX POUR LA FUSION LASER SUR LIT DE POUDRE, ET DISPOSITIF CONÇU A CET EFFET

(30) Priorität: 25.06.2019 DE 102019209133
(43) Veröffentlichungstag der Anmeldung: 30.12.2020
(73) Patentinhaber: Fraunhofer-Gesellschaft zur Förderung der angewandten Forschung e.V., 80686 München (DE)
(72) Erfinder: Wilms, Markus Benjamin, 52074 Aachen (DE); Saewe, Jasmin, 52074 Aachen (DE); Vogelpoth, Andreas, 52074 Aachen (DE); Spoden, Marcel, 52064 Aachen (DE)
(74) Vertreter: Gagel, Roland

(56) Entgegenhaltungen:
- EP-A1- 3 498 473
- EP-A2- 3 124 140
- WO-A1-2016/055523
- Mushtaq Khan: "Selective Laser Melting (SLM) of gold (Au)", , 31. Januar 2010 (2010-01-31), XP055715314, Gefunden im Internet: URL:https://repository.lboro.ac.uk/article s/Selective_Laser_Melting_SLM_of_gold_Au_/ 9544103 [gefunden am 2020-07-15]

## Beschreibung

### Technisches Anwendungsgebiet

Die vorliegende Erfindung betrifft ein Verfahren zum Testen neuer Werkstoffzusammensetzungen, insbesondere Legierungen, für das pulverbettbasierte Laserschmelzen oder Lasersintern sowie eine für die Durchführung des Verfahrens ausgebildete Vorrichtung.

Die zunehmende Forderung nach Ressourceneffizienz hat maßgeblich zu der Entwicklung neuer Hochleistungslegierungen in vielen Bereichen der Industrie geführt. Aktuelle Legierungen werden dabei hauptsächlich für konventionelle Fertigungsrouten, wie bspw. Gießprozesse, entwickelt und erreichen oftmals ihr volles Potential erst durch eine nachgelagerte Wärmebehandlung in Hochtemperaturöfen. Auch für die zunehmend in industriellen Fertigungsketten eingesetzten laserbasierten additiven Fertigungstechnologien müssen zur vollen Ausschöpfung des Potentials neue Legierungen entwickelt werden, die auf die einzigartigen Prozessbedingungen dieser Fertigungsverfahren abgestimmt sind. Zu den laserbasierten additiven Fertigungsverfahren gehören u.a. das Laserauftragsschweißen und das selektive Laserschmelzen, auch unter den Begriffen Laser Powder Bed Fusion (LPBF) oder Selective Laser Melting (SLM) bekannt. Insbesondere das LPBF kann durch den schichtweisen Aufbau aus Metallpulver hohe Konturschärfen und Flexibilität bezüglich der Designfreiheit erreichen, weshalb dem Verfahren große wirtschaftliche Bedeutung beigemessen wird. Im Vergleich zu konventionellen Fertigungsverfahren zeichnet sich das LPBF durch ein lokales Aufschmelzen von Pulvermaterial und damit verbunden sehr große Abkühlraten von bis zu 10⁶ K/s aus. Zusammen mit dem schichtweisen Aufbau führt dies zu einzigartigen Erstarrungsbedingungen, welche insbesondere die mechanischen Eigenschaften konventioneller Legierungen stark beeinflussen.

Die Entwicklung neuer Legierungen für das LPBF ist derzeit noch mit hohen Kosten sowie großem Zeitaufwand verbunden, da jede Variation der chemischen Zusammensetzung einer zu untersuchenden Legierung nur durch eine erneute Inertgasverdüsung von Metallpulver realisiert werden kann. Dabei müssen für jede Iteration ausreichende Pulvermengen von derzeit mindestens 7 l hergestellt werden, um den Bauraum kommerzieller LPBF-Anlagen auszufüllen und somit eine Untersuchung der Verarbeitbarkeit von neuen Legierungen zu ermöglichen. Da Labor-Inertgasverdüsungsanlagen lediglich die Herstellung kleinster Pulvermengen von einigen hundert Gramm erlauben, muss hier auf Inertgasverdüsungen im Industriemaßstab zurückgegriffen werden. Zusätzlich ist die Einstellung der für die Bearbeitung erforderlichen Inertgasatmosphäre (< 100 ppm Sauerstoff) in den oftmals großen Prozesskammern kommerzieller LPBF-Anlagen zeitaufwändig (ca. 120 - 180 min), so dass lange Zeiträume zwischen den Iterationen der Tests neuer Legierungen anfallen.

### Stand der Technik

Für Anwendungen im Dentalbereich, insbesondere für Dentalkronen oder Zahnbrücken, sind LPBF-Anlagen mit kleineren Bauraumgrößen von < 1200 cm³ bekannt, bspw. aus http://en.shining3d.com/print_detail-4472.html oder aus https://www.3dmake.de/3d-drucker/realizer-slm-50/.

Die bei diesen Anlagen genutzten kleinen Strahldurchmesser der Bearbeitungslaserstrahlung (< 50 µm) erlauben jedoch keine ausreichende Übertragbarkeit der Bearbeitungsergebnisse auf kommerzielle LPBF-Anlagen in der Industrie, welche üblicherweise mit größeren Strahldurchmessern (80-100 µm) betrieben werden. Aus http://lm-innovations.com/anlagen/ ist eine LPBF-Anlage speziell für Forschungsanwendungen bekannt, welche ebenfalls einen relativ kleinen Bauraum von 8400 cm³ aufweist. Allerdings wird in dieser Anlage ein kostengünstiger Diodenlaser als Laserstrahlquelle eingesetzt, der nur größere Strahldurchmesser (ca. 140 µm) zulässt. Weiterhin sind die Rüstzeiten dieser Anlage noch immer vergleichsweise hoch.

Die WO 2016/055523 A1 offenbart ein Verfahren zum Testen neuer Werkstoffzusammensetzungen für das pulverbettbasierte Laserschmelzen oder Lasersintern, bei dem ein Einbaumodul mit verschiebbarer Bauplattform und Pulverauftragseinrichtung bereitgestellt wird, das in der Prozesskammer einer Anlage zum pulverbettbasierten Laserschmelzen oder Lasersintern so eingesetzt und darin fixiert wird, dass das Laserbearbeitungssystem der Anlage zur Bearbeitung der zu testenden Werkstoffzusammensetzung im Bauraum des Einbaumoduls genutzt werden kann.

Auch die EP 3 498 473 A1 offenbart ein Einbaumodul, welches in die Prozesskammer einer additiven Fertigungsanlage zum Lasersintern/Laserschmelzen eingesetzt wird.

Die EP 3 124 140 A2 beschreibt eine Fertigungsstation zur additiven Fertigung, durch die mehrere individuelle Prozesskammermodule nacheinander transportiert werden können. Die Prozesskammermodule weisen jeweils u.a. ein Fenster zum Einkoppeln eines Lasers und einen Einlass und Auslass für Inertgas auf.

Mushtaq Khan: "Selective Laser Melting (SLM) of gold (Au)", 31. Januar 2010 (2010-01-31), XP055715314, untersucht das selektive Laserschmelzen von Gold und setzt dabei u.a. eine Bauplattform von weniger als 10 cm² Fläche ein.

Die Aufgabe der vorliegenden Erfindung besteht darin, ein Verfahren zum Testen neuer Werkstoffzusammensetzungen für das pulverbettbasierte Laserschmelzen oder Lasersintern sowie eine zur Durchführung des Verfahrens geeignete Vorrichtung anzugeben, mit denen der Test neuer Werkstoffzusammensetzungen unter Bedingungen, wie sie in industriellen LPBF-Anlagen herrschen, kostengünstig und mit geringerem Zeitaufwand durchführbar ist.

### Darstellung der Erfindung

Die Aufgabe wird mit dem Verfahren und dem Einbaumodul gemäß den Patentansprüchen 1 und 6 gelöst. Vorteilhafte Ausgestaltungen des Verfahrens sowie des Einbaumoduls sind Gegenstand der abhängigen Patentansprüche oder lassen sich der nachfolgenden Beschreibung sowie den Ausführungsbeispielen entnehmen.

Bei dem vorgeschlagenen Verfahren wird ein Einbaumodul bereitgestellt, das durch eine Prozesskammer mit einem Bauraum mit verschiebbarer Bauplattform, einer Pulverauftragseinrichtung und einem Pulverreservoir gebildet ist. Die Prozesskammer verfügt hierbei wenigstens über einen Einlass und einen Auslass für ein Inert- bzw. Schutzgas, vorzugsweise ein Schutzgasführungssystem, Antriebe für die Verschiebung der Bauplattform, das Pulverreservoir und den Pulverauftrag und ein Fenster für die Einkopplung von Bearbeitungslaserstrahlung über der Bauplattform. Das Einbaumodul zeichnet sich dadurch aus, dass die Bauplattform eine Fläche von lediglich ≤ 50 cm², vorzugsweise ≤ 10 cm², aufweist. Dieses Einbaumodul wird dann in eine entsprechend größere Anlage zum pulverbettbasierten Laserschmelzen oder Lasersintern so eingesetzt und darin fixiert, dass das Laserbearbeitungssystem der Anlage unmittelbar, also ohne weitere konstruktive Anpassungen, zur Bearbeitung der zu testenden Werkstoffzusammensetzung im Bauraum der Prozesskammer des Einbaumoduls genutzt werden kann. Die zu testende Werkstoffzusammensetzung wird in das Pulverreservoir des Einbaumoduls gefüllt und dann mit dem Laserbearbeitungssystem der Anlage in bekannter Weise bearbeitet, um einen Probenkörper schichtweise aufzubauen. Der Probenkörper kann anschließend entsprechend analysiert werden.

Durch die Bereitstellung des Einbaumoduls für größere, insbesondere industrielle, LPBF-Anlagen kann das Laserbearbeitungs- bzw. Laserscannersystem dieser Anlagen für die Bearbeitung der zu testenden Werkstoffzusammensetzung genutzt werden. Bei der größeren Anlage handelt es sich um eine ohne das Einbaumodul voll funktionsfähige Anlage zur Fertigung von Bauteilen, die also bspw. auch über eine Prozesskammer mit einem entsprechend größeren Bauraum mit verschiebbarer Bauplattform verfügt. Da das Einbaumodul eine geringe Fläche der Bauplattform und damit einen entsprechend kleinen Bauraum aufweist, erfordert das Testen neuer Werkstoffzusammensetzungen nur geringe Mengen an Pulvermaterial der Werkstoffzusammensetzung. Durch den kleinen Bauraum (Fläche x Hub der Bauplattform; vorzugsweise ≤ 100 cm³, vorzugsweise ≤ 40 cm³) kann auch die Prozesskammer sehr kompakt realisiert werden. Das Innenvolumen der Prozesskammer beträgt vorzugsweise ≤ 6000 cm³, besonders bevorzugt ≤ 4000 cm³. Unter dem Innenvolumen der Prozesskammer ist hierbei das Gasvolumen der Prozesskammer zu verstehen, das beim Betrieb mit dem Inertgas aufgefüllt wird. Das kleine Innenvolumen ermöglicht eine vergleichbar geringe Zeit für die Einstellung der Inertgasatmosphäre. Durch die integrierten Antriebe zum eigenständigen Verfahren der Bauplattform und des Pulverreservoirs sowie für den Pulverauftrag kann das Modul unabhängig von der bestehenden großen LPBF-Anlage betrieben werden. Das Schutzgasführungssystem, bestehend aus einer Einlass-und einer Auslassdüse, Filter und Umwälzpumpe, kann vollständig als Teil des Einbaumoduls ausgebildet sein. Dies führt zu einem geschlossenem eigenständigen System. Es können auch Teile der Schutzgasführung der kommerziellen Anlage genutzt werden, indem die Schutzgaszufuhr und -abfuhr des Einbaumoduls an die der kommerziellen Anlage angebunden und somit der Filter sowie die Pumpe des kommerziellen Systems genutzt werden. Die Nutzung des Laserbearbeitungssystems der großen LPBF-Anlage für die Laserbearbeitung in diesem Einbaumodul ermöglicht eine nahezu vollständige Übertragbarkeit von Prozessfenstern und Bearbeitungsergebnissen auf große bzw. kommerzielle LPBF-Anlagen. Das Einbaumodul lässt sich kostengünstig bereitstellen, da es nicht über ein Laserbearbeitungssystem mit Laserquelle und Laserscaneinrichtung verfügt. Eine präzise Montage kann in der größeren Anlage über geeignete Adapterplatten erfolgen. Das Einbaumodul wird am Ort des Eintrittsfensters der Prozesskammer der größeren Anlage befestigt.

Die Pulverauftragseinrichtung umfasst bei dem vorgeschlagenen Einbaumodul vorzugsweise ein Rakelsystem, dass das aus dem Pulverreservoir geförderte Pulver über der Bauplattform des Bauraums in der Bearbeitungsebene verteilt. Sowohl das Rakelsystem als auch der Mechanismus zur Förderung des Pulvers aus dem Pulverreservoir weisen dabei einen geeigneten Antrieb auf. Als Antriebe werden für das Rakelsystem vorzugsweise ein Schrittmotor, für die Förderung des Pulvers aus dem Pulverreservoir sowie für die Verschiebung der Bauplattform im Bauraum vorzugsweise Linearaktuatoren eingesetzt.

In einer vorteilhaften Ausgestaltung wird ein Einbaumodul eingesetzt, bei dem das Pulverreservoir und der Bauraum mit verschiebbarer Bauplattform durch obere Abschnitte von zwei zylinderförmigen Komponenten gebildet sind, im Folgenden auch als Pulverzylinder bezeichnet, die an die Prozesskammer angesetzt sind. Der Begriff der Zylinderform ist hierbei im mathematischen Sinne als allgemeiner Zylinder zu verstehen, dessen Grundfläche nicht nur kreisrund sondern auch bspw. elliptisch oder polygonförmig, insbesondere rechteckig, ausgebildet sein kann. Beide Pulverzylinder verfügen jeweils über eine verschiebbare Plattform, die in einem Fall die Bauplattform und im anderen Fall einen Schieber für den Transport des Pulvers aus dem Pulverreservoir bildet. Im unteren Teil der Pulverzylinder sind dann die Antriebe für die Plattformen angeordnet. Beide Zylinder können dabei identisch ausgebildet sein.

In einer vorteilhaften Ausgestaltung sind die beiden Pulverzylinder so ausgebildet, dass sich das Pulver bzw. der gefertigte Probenkörper leicht nach unten herausnehmen lässt. Hierzu weist der Pulverzylinder einen lös- bzw. abnehmbaren unteren Abschnitt mit dem darin angeordneten Antrieb und vorzugsweise auch ein abnehmbares Zwischenstück zwischen dem unteren und dem oberen Abschnitt auf. Auf diese Weise lässt sich auch das Pulver jederzeit einfach unter geringem Pulververlust austauschen.

Das vorgeschlagene Einbaumodul zeichnet sich durch eine Prozesskammer aus, die wenigstens einen Bauraum mit verschiebbarer Bauplattform, deren Plattformfläche ≤ 10 cm² beträgt, eine Pulverauftragseinrichtung, ein Pulverreservoir, einen Einlass und einen Auslass für ein Inert- bzw. Schutzgas, vorzugsweise mit Schutzgasführungssystem, Antriebe für die Verschiebung der Bauplattform, das Pulverreservoir und den Pulverauftrag und ein Fenster für die Einkopplung von Bearbeitungslaserstrahlung über der Bauplattform aufweist. Die Vorrichtung weist kein Laserbearbeitungssystem mit Laserquelle und Laserscaneinrichtung auf.

Vorzugsweise ist in der Prozesskammer auch wenigstens ein Sauerstoffsensor zur Einstellung bzw. Überwachung der Inertgasatmosphäre integriert. Weiterhin kann in einer vorteilhaften Ausgestaltung auch wenigstens ein Drucksensor, auch in Verbindung mit einem Überdruckventil, in der Prozesskammer angeordnet sein, um die Inertgasatmosphäre möglichst präzise einstellen zu können. Zu diesem Zweck können auch steuerbare Ein- und Auslassventile für die Zuführung und den Auslass des Inertgases angeordnet sein.

Die Vorrichtung bzw. das Einbaumodul wird mit einer Steuereinrichtung verbunden, über die die Antriebe für den Pulverauftrag und die Verschiebung der Bauplattform sowie ggf. die steuerbaren Ein- und Auslassventile gesteuert werden können.

Das in dieser Vorrichtung vorhandene kleine Innenvolumen der Prozesskammer ermöglicht eine schnelle Einstellung einer Inertgasatmosphäre (< 20 min) und verkürzt somit effektiv die Rüstzeit zwischen verschiedenen Versuchsreihen. Darüber hinaus werden aufgrund des kleinen Bauraums nur geringste Mengen an Pulvermaterial (ca. 300 ml) zur Produktion kleiner Probenkörper (ca. 2 x 10 mm³) benötigt, so dass auf Laborchargen von Inertgasverdüsungen oder mechanischen Legierungsprozessen zurückgegriffen werden kann. Auf diese Weise kann die Zeitdauer zwischen mehreren Iterationsschritten der spezifischen Legierungsentwicklung beim LPBF sowie Kosten der sonst notwendigen Inertgasverdüsungen signifikant reduziert werden. Durch die Möglichkeit der Verwendung kommerziell erhältlicher und standardisierter Bauteile sowie den Verzicht auf kostenintensive Laserquellen und Scannersysteme lässt sich die Vorrichtung bzw. das Einbaumodul kostengünstig realisieren.

Das vorgeschlagene Verfahren und die zugehörige Vorrichtung werden insbesondere für die Legierungsentwicklung für laserbasierte, additive Prozesse, insbesondere LPBF, eingesetzt. Dies betrifft vor allem Branchen, welche additive Fertigungstechnologien einsetzen oder in denen metallische Pulverwerkstoffe entwickelt werden. Hierzu zählen u.a. Unternehmen der Luft- und Raumfahrtindustrie, der Turbomaschinenbau, der Automobilbau, der Werkzeugbau sowie allgemein metallverarbeitende oder metallerzeugende Unternehmen. Das Verfahren und die Vorrichtung sind auch für Forschungsinstitute geeignet, welche im Bereich additiver Fertigungstechnologien forschen.

### Kurze Beschreibung der Zeichnungen

Das vorgeschlagene Verfahren und die zugehörige Vorrichtung werden nachfolgend anhand von Ausführungsbeispielen in Verbindung mit den Zeichnungen nochmals näher erläutert. Hierbei zeigen:
- Fig. 1: eine schematische Darstellung eines beispielhaften Einbaumoduls gemäß der vorliegenden Erfindung in zwei unterschiedlichen Ansichten;
- Fig. 2: ein Beispiel für die Montage des Einbaumoduls am Eintrittsfenster der Prozesskammer einer größeren LBPF-Anlage;
- Fig. 3: ein Beispiel für eine Montage eines Einbaumoduls, das nicht von den Patentansprüchen umfasst ist, in einer detaillierten beispielhaften Darstellung auf der Bauplattform einer größeren LPBF-Anlage in Schnittansicht;
- Fig. 4: zwei isometrische Ansichten eines detaillierten Beispiels des vorgeschlagenen Einbaumoduls von außen;
- Fig. 5: einen Längsschnitt durch das Einbaumodul der Figur 4;
- Fig. 6: eine Außenansicht und einen Längsschnitt durch einen der Pulverzylinder des Einbaumoduls der Figur 4;
- Fig. 7: eine schematische Darstellung einer beispielhaften Ausgestaltung des Einbaumoduls mit eigenem Schutzgasführungssystem; und
- Fig. 8: eine schematische Darstellung einer beispielhaften Ausgestaltung des Einbaumoduls, bei der wahlweise ein eigenes Schutzgasführungssystem oder ein Teil des Schutzgasführungssystems der größeren Anlage genutzt werden kann.

### Wege zur Ausführung der Erfindung

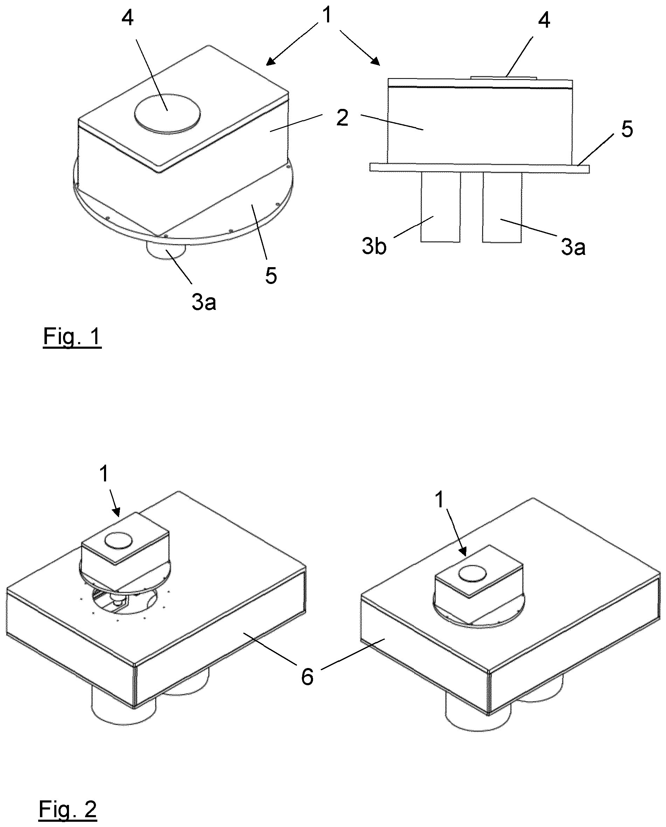

Im Folgenden werden das vorgeschlagene Verfahren und die zugehörige Vorrichtung anhand eines Einbaumoduls näher beschrieben, das anstelle des Eintrittsfensters in eine bestehende LPBF-Anlage eingesetzt wird. Das Einbaumodul 1 dieses Beispiels besteht aus einer kleinen Prozesskammer 2 mit einem Innenvolumen von 3840 cm³, wie dies schematisch in den zwei Teilabbildungen der Figur 1 zu erkennen ist. An die Prozesskammer 2 sind zwei Pulverzylinder 3a, 3b angesetzt, von denen einer im oberen Abschnitt den Bauraum bildet und der andere das Pulverreservoir für die Pulverauftragseinrichtung. Oberhalb des Bauraums ist ein Eintrittsfenster 4 für die Einkopplung der Bearbeitungslaserstrahlen in die Prozesskammer 2 integriert. Durch den Einbau dieses Einbaumoduls 1 in kommerzielle LPBF-Anlagen mit deutlich größerem Bauraum kann das dort vorhandene Laserscannersystem für die Fertigung der Probenkörper genutzt werden. Die präzise Montage wird - je nach Einbauposition - über entsprechende Adapterplatten, Gestelle oder Spannvorrichtungen ermöglicht. Im vorliegenden Beispiel soll das Einbaumodul 1 in das Eintrittsfenster einer Prozesskammer 6 einer kommerziellen LPBF-Anlage montiert werden. Hierzu weist das Einbaumodul 1 eine entsprechende Adapterplatte 5 auf, die der Größe des Eintrittsfensters der Prozesskammer 6 der kommerziellen LPBF-Anlage entspricht. Dieses Fenster wird beim Einbau herausgenommen und das vorliegende Einbaumodul 1 mit der Adapterplatte 5 anstelle dieses Fensters eingesetzt, wie dies in den beiden Teilabbildungen der Figur 2 schematisch dargestellt ist. Die Prozesskammer 6 der kommerziellen LPBF-Anlage mit den entsprechenden Aufbau- und Pulverreservoir-Zylindern ist in dieser Figur stark schematisiert dargestellt.

Die in diesem Beispiel dargestellte Prozesskammer 2 des Einbaumoduls bietet einen Bauraum von ca. 20 cm³ bei einem Durchmesser der Bauplattform von 40 mm. Durch Schrittmotoren zum eigenständigen Verfahren von Bauplattform, Pulvervorrat sowie in diesem Beispiel nicht erkennbarem Rakelsystem, kann das Einbaumodul unabhängig von der bestehenden LPBF-Anlage betrieben werden. Zur Steuerung der Schrittmotoren und zur Gewährleistung maximaler Freiheitsgrade wird eine eigene Steuerungssoftware genutzt. Diese ermöglicht ebenfalls die einfache Integration weiterer Messinstrumente, wie bspw. Pyrometer. Die entsprechenden elektrischen Anschlüsse des Einbaumoduls werden in einem externen, kompakten Steuerschrank realisiert. Zusätzlich ist ein eigenes System, bestehend aus Ein- und Auslassventilen sowie Sauerstoffsensor (Typ: Lambda-Sonde), zur Einstellung bzw. Überwachung der Inertgasatmosphäre integriert. Durch einen Drucksensor und ein Überdruckventil kann die Atmosphäre in der Prozesskammer unabhängig von der bestehenden LPBF-Anlage präzise eingestellt werden.

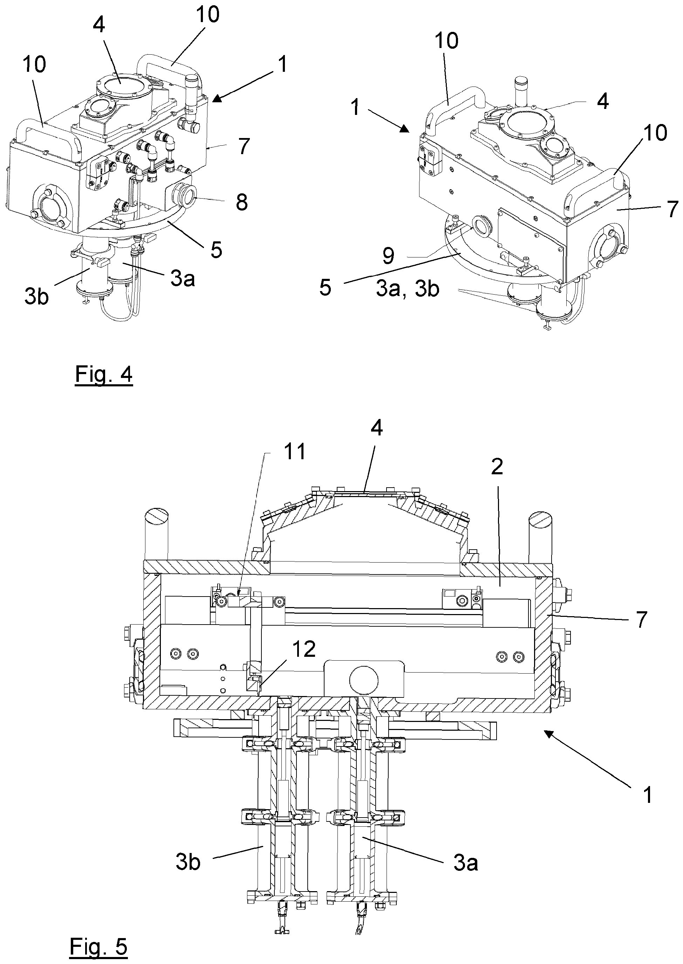

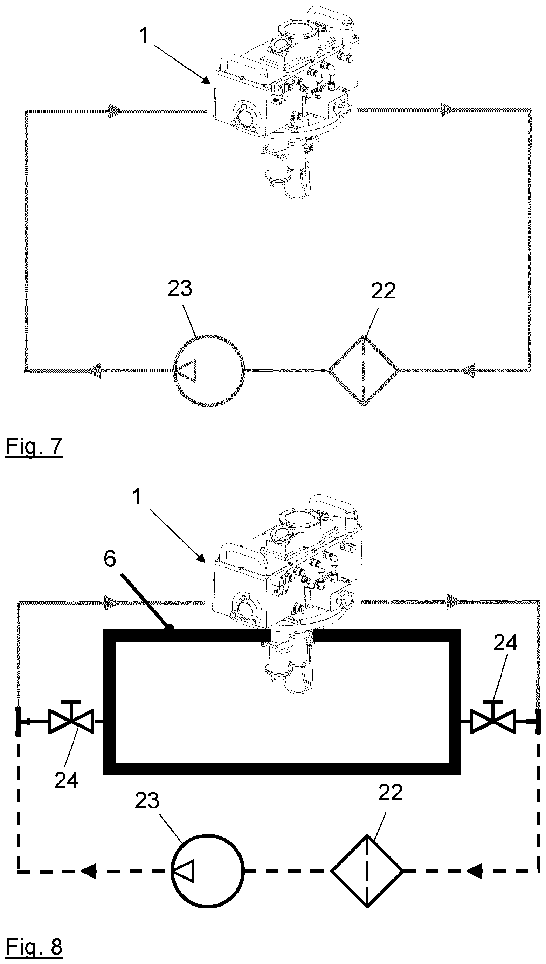

Figur 4 zeigt eine präzisere Darstellung eines beispielhaften Einbaumoduls 1 gemäß der vorliegenden Erfindung in zwei Darstellungen von unterschiedlichen Seiten. In der linken Teilabbildung ist zusätzlich der Schutzgaseinlass 8 am Gehäuse 7 der Prozesskammer zu erkennen. Das Einbaumodul lässt sich über zwei am Gehäuse 7 angebrachte Griffe 10 leicht in eine bestehende Anlage einsetzen und wieder entnehmen. Die rechte Teilabbildung zeigt auch den Schutzgasauslass 9 am Gehäuse 7 der Prozesskammer, der an das Schutzgasführungssystem mit Filter 22 und Umwälzpumpe 23 angebunden wird. Dieses Schutzgasführungssystem ist in einer vorteilhaften Ausgestaltung Bestandteil des vorgeschlagenen Einbaumoduls, wie dies in Figur 7 schematisch angedeutet ist. Unterhalb der Prozesskammer sind jeweils die beiden Pulverzylinder 3a, 3b zu erkennen.

Es können auch Teile der Schutzgasführung der kommerziellen Anlage genutzt werden, indem die Schutzgaszufuhr und -abfuhr des Einbaumoduls an die der kommerziellen Anlage angebunden und somit Filter und Pumpe des kommerziellen Systems genutzt werden. Figur 8 zeigt hierzu schematisch eine beispielhafte Ausgestaltung, bei der je nach Stellung der Absperrventile 24 entweder Filter und Pumpe des kommerziellen Systems oder - gestrichelt dargestellt - optional vorhandene Filter 22 und Pumpe 23 des Einbaumodules genutzt werden können.

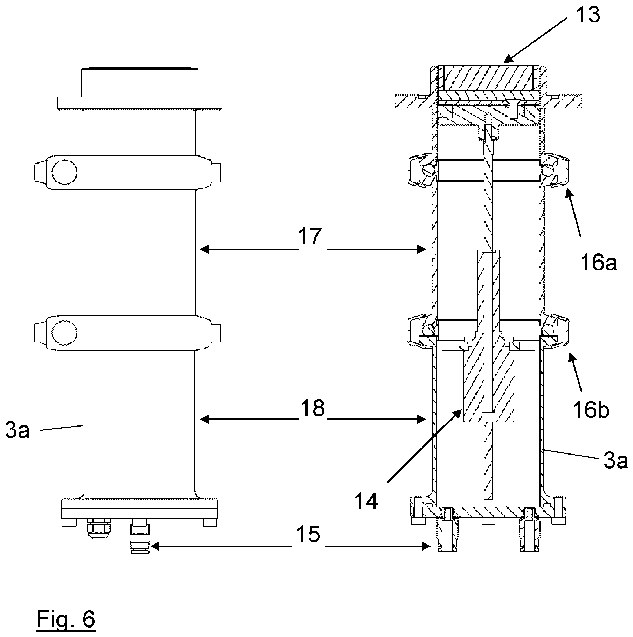

Figur 5 zeigt einen Längsschnitt durch dieses Einbaumodul der Figur 4, in dem zusätzlich die Pulverauftragseinrichtung 11 mit dem Rakel 12 zu erkennen ist, die das Pulver vom Pulverreservoir des einen Pulverzylinders 3b über der Bauplattform des anderen Pulverzylinders 3a verteilt. Die beiden Pulverzylinder 3a, 3b sind identisch ausgebildet. Einer davon ist in der Figur 6 nochmals in einer Außenansicht und im Längsschnitt dargestellt. Ein derartiger Pulverzylinder 3a weist eine Bauplattform 13 (bzw. Verschiebeplattform im Falle des Pulverreservoirs) auf, die innerhalb des oberen Zylindervolumens mit Hilfe des Linearaktuators 14 verschiebbar ist. Jeder Pulverzylinder weist hierbei Anschlüsse 15 für Schutzgas und Druckausgleich auf. Im vorliegenden Beispiel ist der Pulverzylinder 3a aus drei Zylinderteilen aufgebaut, die über Verschlussklemmen 16a, 16b miteinander verbunden sind. Das mittlere Zylinderteil 17 ist hierbei als Zwischenstück zur Pulverlagerung im Falle des Pulverreservoirs ausgebildet. Das untere Zylinderteil 18 dient der Halterung für den Linearaktuator 14. Durch diesen mehrteiligen Aufbau lässt sich ein schneller Pulverwechsel mit geringen Pulververlusten realisieren. Hierzu wird die Bauplattform 13 auf ihre niedrigste Position im Bereich der obersten Verschlussklemme 16a abgesenkt. Anschließend wird die untere Verschlussklemme 16b entfernt und das untere Zylinderteil 18 mit dem Linearaktuator 14 herausgezogen bis kurz vor dem Entfernen der Bauplattform 13. Anschließend wird die obere Verschlussklemme 16a entfernt und das Zwischenstück 17 wird mit einem Blindflansch verschlossen. Danach wird die Bauplattform 13 vollständig aus dem Zwischenstück 17 herausgezogen und die zweite Seite des Zwischenstücks 17 mit einem Blindflansch verschlossen. Auf diese Weise kann ein Pulvervorrat einfach und schnell entfernt und durch einen anderen ausgetauscht werden. Dieser schnelle Austausch durch Abziehen wenigstens eines Zylinderteils kann selbstverständlich konstruktiv auch in anderer Weise gelöst werden.

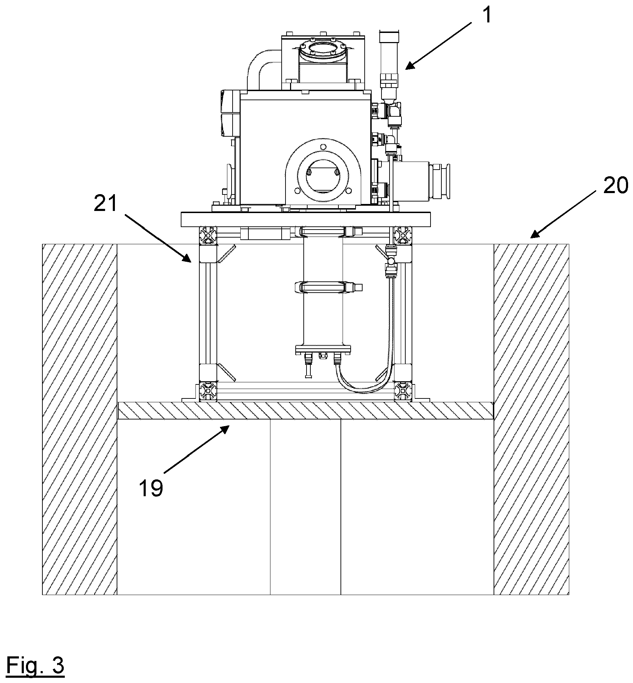

Figur 3 zeigt schließlich noch ein Beispiel für den Einbau eines Einbaumoduls 1, das nicht von den Patentansprüchen umfasst ist, in eine kommerzielle LPBF-Anlage. In diesem Fall wird das Einbaumodul 1 auf der Bauplattform 19 bzw. einer auf dieser Bauplattform 19 aufgebrachten Substratplatte montiert. Hierzu ist in diesem Beispiel ein Befestigungsgestell 21 an dem Einbaumodul 1 befestigt, das an der Substratplatte der Bauplattform 19, bspw. über entsprechende Passstifte, fixiert wird. Der Pulverzylinder 20 einer kommerziellen LPBF-Anlage ist in der Regel im Verhältnis zum Einbaumodul 1 größer als in der Figur dargestellt.

### Bezugszeichenliste

- 1: Einbaumodul
- 2: Prozesskammer
- 3a/b: Pulverzylinder
- 4: Eintrittsfenster
- 5: Adapterplatte
- 6: Prozesskammer kommerzieller LPBF-Anlage
- 7: Gehäuse der Prozesskammer
- 8: Schutzgaseinlass
- 9: Schutzgasauslass
- 10: Griff
- 11: Pulverauftragseinrichtung
- 12: Rakel
- 13: Bauplattform
- 14: Linearaktuator
- 15: Anschlüsse für Schutzgas und Druckausgleich
- 16a/b: Verschlussklemme
- 17: mittleres Zylinderteil (Zwischenstück)
- 18: unteres Zylinderteil
- 19: Bauplattform mit Substratplatte einer kommerziellen LPBF-Anlage
- 20: Pulverzylinder einer kommerziellen LPBF-Anlage
- 21: Befestigungsgestell
- 22: Filter
- 23: Pumpe
- 24: Absperrventil

## Patentansprüche

1. Verfahren zum Testen neuer Werkstoffzusammensetzungen für das pulverbettbasierte Laserschmelzen oder Lasersintern, bei dem
- ein Einbaumodul (1) bereitgestellt wird, das durch eine Prozesskammer (2) mit einem Bauraum mit verschiebbarer Bauplattform (13), einer Pulverauftragseinrichtung (11), einem Pulverreservoir, wenigstens einem Einlass (8) und einem Auslass (9) für ein Inertgas, Antrieben (14) für eine Verschiebung der Bauplattform (13), das Pulverreservoir und den Pulverauftrag und einem Fenster (4) für die Einkopplung von Bearbeitungslaserstrahlung über der Bauplattform (13) gebildet ist,
wobei die Bauplattform (13) eine Fläche von ≤ 50 cm² aufweist,
- das Einbaumodul (1) in eine Anlage zum pulverbettbasierten Laserschmelzen oder Lasersintern, die eine Prozesskammer (6) mit einem größeren Bauraum mit verschiebbarer Bauplattform (19) aufweist, so eingesetzt und darin fixiert wird, dass ein Laserbearbeitungssystem der Anlage zur Bearbeitung der zu testenden Werkstoffzusammensetzung im Bauraum des Einbaumoduls (1) genutzt werden kann, und
- die zu testende Werkstoffzusammensetzung im Bauraum des Einbaumoduls (1) mit dem Laserbearbeitungssystem der Anlage bearbeitet wird, um einen Probekörper herzustellen,
und wobei das Einbaumodul (1) am Ort eines Eintrittsfensters der Prozesskammer (6) der Anlage eingesetzt und darin fixiert wird.

2. Verfahren nach Anspruch 1,
**dadurch gekennzeichnet,**
**dass** das Einbaumodul (1) mit einem eigenen Schutzgasführungssystem bereitgestellt wird, das wenigstens eine Einlass- und eine Auslassdüse (8, 9), einen Filter (22) und eine Umwälzpumpe (23) für das Inertgas aufweist.

3. Verfahren nach Anspruch 1,
**dadurch gekennzeichnet,**
**dass** für eine Führung des Inertgases Teile der Anlage zum pulverbettbasierten Laserschmelzen oder Lasersintern, insbesondere deren Filter und Umwälzpumpe, genutzt werden.

4. Verfahren nach einem der Ansprüche 1 bis 3,
**dadurch gekennzeichnet,**
**dass** das Einbaumodul (1) in einer Ausgestaltung bereitgestellt wird, bei der das Pulverreservoir und der Bauraum mit verschiebbarer Bauplattform (13) durch obere Abschnitte von zwei zylinderförmigen Komponenten gebildet sind, die an die Prozesskammer (2) angesetzt sind.

5. Verfahren nach Anspruch 4,
**dadurch gekennzeichnet,**
**dass** die zylinderförmigen Komponenten einen lösbaren unteren Abschnitt aufweisen und ein Austausch der zu testenden Werkstoffzusammensetzung durch Abnehmen des unteren Abschnittes erfolgt.

6. Einbaumodul zur Durchführung des Verfahrens nach einem der vorangehenden Patentansprüche, das eine Prozesskammer (2) mit einem Bauraum mit verschiebbarer Bauplattform (13), einer Pulverauftragseinrichtung (11), einem Pulverreservoir, wenigstens einem Einlass (8) und einem Auslass (9) für ein Inertgas, Antrieben (14) für eine Verschiebung der Bauplattform (13), das Pulverreservoir und den Pulverauftrag und einem Fenster (4) für die Einkopplung von Bearbeitungslaserstrahlung über der Bauplattform (13) aufweist,
**dadurch gekennzeichnet,**
**dass** die Bauplattform (2) eine Fläche von ≤ 10 cm² aufweist und das Einbaumodul eine Adapterplatte (5) aufweist, die ein Einsetzen und Fixieren des Einbaumoduls am Ort eines Eintrittsfensters einer Anlage zum pulverbettbasierten Laserschmelzen oder Lasersintern ermöglicht, die eine Prozesskammer (6) mit einem größeren Bauraum mit verschiebbarer Bauplattform (19) aufweist.

7. Vorrichtung nach Anspruch 6,
**dadurch gekennzeichnet,**
**dass** die Vorrichtung mit einem eigenen Schutzgasführungssystem ausgestattet ist, das wenigstens eine Einlass- und eine Auslassdüse (8, 9), einen Filter (22) und eine Umwälzpumpe (23) für das Inertgas aufweist.

8. Vorrichtung nach Anspruch 6 oder 7,
**dadurch gekennzeichnet,**
**dass** das Pulverreservoir und der Bauraum mit verschiebbarer Bauplattform (13) des Einbaumoduls durch obere Abschnitte von zwei zylinderförmigen Komponenten gebildet sind, die an die Prozesskammer (2) des Einbaumoduls angesetzt sind.

9. Vorrichtung nach Anspruch 8,
**dadurch gekennzeichnet,**
**dass** die zylinderförmigen Komponenten einen lösbaren unteren Abschnitt aufweisen, der einen Austausch der zu testenden Werkstoffzusammensetzung durch Abnehmen des unteren Abschnittes ermöglicht.

10. Vorrichtung nach einem der Ansprüche 6 bis 9,
**dadurch gekennzeichnet,**
**dass** die Prozesskammer (2) des Einbaumoduls ein Innenvolumen von ≤ 4000 cm³ aufweist.

11. Vorrichtung nach einem der Ansprüche 6 bis 10,
**dadurch gekennzeichnet,**
**dass** wenigstens ein Sauerstoffsensor und/oder ein Drucksensor zur Einstellung und Überwachung der Inertgasatmosphäre in der Prozesskammer des Einbaumoduls angeordnet sind.

## Claims

1. Method for testing new material compositions for powder bed-based laser melting or laser sintering, in which
- an installation module (1) is provided which consists of a process chamber (2) with a building space with a movable build platform (13), with a powder deposition device (11), with a powder reservoir, with at least one inlet (8) and one outlet (9) for an inert gas, with drives (14) for moving the build platform (13), the powder reservoir and the powder application, and with a window (4) for coupling processing laser radiation above the build platform (13),
wherein the build platform (13) has a surface area ≤ 50 cm²,
- the installation module (1) is inserted in a plant for powder bed-based laser melting or laser sintering having a process chamber (6) with a larger building space with movable build platform (19) and fixed therein in such a way that a laser processing system of the plant can be used to process the to be tested material composition in the building space of the installation module (1), and
- the to be tested material composition is processed in the building space of the installation module (1) using the laser processing system of the plant to produce a test specimen,
and wherein the installation module (1) is inserted at the location of an inlet window of the process chamber (6) of the plant and fixed therein.

2. Method according to Claim 1,
**characterized in that**
the installation module (1) is made available with its own shielding gas routing system, which has at least one inlet nozzle and one outlet nozzle (8, 9), a filter (22) and a circulation pump (23) for the inert gas.

3. Method according to Claim 1,
**characterized in that**
parts of the plant for powder bed-based laser melting or laser sintering, particularly the filter and circulation pump thereof, are used for routing the inert gas.

4. Method according to any one of Claims 1 to 3,
**characterized in that**
the installation module (l) is provided in a configuration in which the powder reservoir and the building space with movable build platform (13) are formed by upper sections of two cylindrical components, which are attached to the process chamber (2).

5. Method according to Claim 4,
**characterized in that**
the cylindrical components have a detachable lower section, and an exchange of the material compositions to be tested is performed by removing the lower section.

6. Installation module for carrying out the method according to any one of the preceding claims, including a process chamber (2) with a building space with movable build platform (13), with a powder deposition device (11), with a powder reservoir, with at least one inlet (8) and one outlet (9) for an inert gas, with drives (14) for moving the build platform (13), the powder reservoir and the powder application, and with a window (4) for coupling processing laser radiation above the build platform (13),
**characterized in that**
the build platform (2) has a surface area ≤ 10 cm² and the installation module includes an adapter plate (5), which enables the installation module to be inserted and fixed at the location of an inlet window of a plant for powder bed-based laser melting or laser sintering that has a process chamber (6) with a larger building space with movable build platform (19).

7. Apparatus according to Claim 6,
**characterized in that**
the apparatus is equipped with its own shielding gas routing system, which has at least one inlet nozzle and one outlet nozzle (8, 9), a filter (22) and a circulation pump (23) for the inert gas.

8. Apparatus according to Claim 6 or 7,
**characterized in that**
the powder reservoir and the building space with movable build platform (13) of the installation module are formed by upper sections of two cylindrical components, which are attached to the process chamber (2) of the installation module.

9. Apparatus according to Claim 8,
**characterized in that**
the cylindrical components have a detachable lower section, which enables an exchange of the material compositions that are to be tested by removal of the lower section.

10. Apparatus according any one of Claims 6 to 9,
**characterized in that**
the process chamber (2) of the installation module has an interior volume ≤ 4000 cm³.

11. Apparatus according any one of Claims 6 to 10,
**characterized in that**
at least one oxygen sensor and/or one pressure sensor is/are arranged in the process chamber of the installation module to adjust and monitor the inert gas atmosphere.

## Revendications

1. Procédé de test de nouvelles compositions de matériaux pour la fusion laser sur lit de poudre ou le frittage laser, dans lequel
- un module d'installation (1) est prévu, qui se compose d'une chambre de traitement (2) avec un espace de construction avec une plate-forme de construction mobile (13), un dispositif d'application de poudre (11), un réservoir de poudre, au moins une entrée (8) et une sortie (9) pour un gaz inerte, des entraînements (14) pour un déplacement de la plate-forme de construction (13), le réservoir de poudre et dispositif d'application de poudre et une fenêtre (4) pour le couplage du rayonnement laser de traitement sur la plate-forme de construction (13),
dans lequel la plate-forme de construction (13) présente une surface de ≤ 50 cm²,
- le module d'installation (1) est placé dans une installation pour la fusion laser sur lit de poudre ou le frittage laser, qui présente une chambre de traitement (6) avec un plus grand espace de construction avec une plate-forme de construction mobile (19) et y est fixé de telle sorte qu'un système de traitement au laser du système de traitement des compositions de matériau à tester puisse être utilisée dans l'espace de construction du module d'installation (1), et
- la composition de matériau à tester dans l'espace d'installation du module d'installation (1) est traitée avec le système de traitement laser de l'installation, afin de produire un échantillon,
et dans lequel le module d'installation (1) est placé à l'emplacement d'une fenêtre d'entrée de la chambre de traitement (6) du système et fixé dans celle-ci.

2. Procédé selon la revendication 1,
**caractérisé en ce que**
le module d'installation (1) est pourvu de son propre système d'alimentation en gaz inerte, qui présente au moins une buse d'entrée et une buse de sortie (8, 9), un filtre (22) et une pompe de circulation (23) pour le gaz inerte.

3. Procédé selon la revendication 1,
**caractérisé en ce que**
des parties du système de fusion laser sur lit de poudre ou de frittage, notamment leur filtre et pompe de circulation, sont utilisées pour un guidage du gaz inerte.

4. Procédé selon une des revendications 1 à 3,
**caractérisé en ce que**
le module d'installation (1) est prévu dans un mode de réalisation, dans lequel le réservoir de poudre et l'espace de construction avec une plate-forme de construction mobile (13) sont formés par des parties supérieures de deux composants cylindriques, qui sont fixés sur la chambre de traitement (2).

5. Procédé selon la revendication 4,
**caractérisé en ce que**
les composants cylindriques ont une section inférieure amovible et la composition de matériau à tester est remplacée en retirant la section inférieure.

6. Module d'installation pour la mise en œuvre du procédé selon une des revendications précédentes, qui présente une chambre de traitement (2) avec un espace de construction avec une plate-forme de construction mobile (13), un dispositif d'application de poudre (11), un réservoir de poudre, au moins une entrée (8) et une sortie (9) pour un gaz inerte, des entraînements (14) pour un déplacement de la plate-forme de construction (13), le réservoir de poudre et dispositif d'application de poudre et une fenêtre (4) pour le couplage du rayonnement laser de traitement sur la plate-forme de construction (13),
**caractérisé en ce que**
la plate-forme de construction (2) présente une surface de ≤ 10 cm², et le module d'installation présente une plaque d'adaptateur (5), qui, permet une pose et une fixation du module d'installation à l'emplacement d'une fenêtre d'entrée d'une installation de fusion laser sur lit de poudre ou de frittage laser, qui présente une chambre de processus (6) avec un plus grand espace de construction avec une plate-forme de construction mobile (19).

7. Dispositif selon la revendication 6,
**caractérisé en ce que**
le dispositif est pourvu de son propre système d'alimentation en gaz de protection, au moins une buse d'entrée et une buse de sortie (8, 9), un filtre (22) et une pompe de circulation (23) pour le gaz inerte.

8. Dispositif selon la revendication 6 ou 7,
**caractérisé en ce que**
le réservoir de poudre et l'espace de construction avec la plate-forme de construction mobile (13) du module d'installation sont formés par des parties supérieures de deux composants cylindriques, qui sont fixés sur la chambre de traitement (2).

9. Dispositif selon la revendication 8,
**caractérisé en ce que**
les composants cylindriques présentent une section inférieure amovible, qui permet un échange de la composition de matériau à tester en retirant la section inférieure.

10. Dispositif selon une des revendications 6 à 9,
**caractérisé en ce que**
la chambre de traitement (2) du module d'installation présente un volume intérieur de ≤ 4000 cm³.

11. Dispositif selon une des revendications 6 à 10,
**caractérisé en ce qu'**
au moins un capteur d'oxygène et/ou un capteur de pression pour le réglage et la surveillance de l'atmosphère de gaz inerte sont disposés dans la chambre de traitement du module d'installation.
